# EUROPEAN PATENT APPLICATION

(11) **EP 4 843 842 A1**
(43) Date of publication of application: **25.11.2026**
(21) Application number: 25177491.5
(22) Date of filing: 19.05.2025
(51) Int. Cl.: B60S 1/34, B60S 1/36, B60S 1/32

(54) **WIPER ARRANGEMENT**

(71) Applicant: Koenigsegg Automotive AB, 262 74 Ängelholm (SE)
(72) Inventor: von KOENIGSEGG, Christian, 266 54 VEJBYSTRAND (SE); JÄRNHESTER, Anton, 254 33 HELSINGBORG (SE)
(74) Representative: Brann AB

(57) **Abstract**

A wiper arm (12) for a wiper arrangement (10), wherein the wiper arm (12) comprises: a base (20), a beam (22), and a mount (24). The base (20) is configured to be connected to a hub (36) of the wiper arrangement (10), the beam (22) interconnects the base (20) and the mount (24), and the beam (22) forms a cantilever leaf spring between the base (20) and the mount (24). The mount (24) is configured to be connected to a wiper blade, and the wiper arm (12) is a monolithic structure.

## Description

### TECHNICAL FIELD

The proposed technologies relates to wiper arrangements for vehicles, and in particular to wiper arms and hub arrangements for such wiper arrangements.

### BACKGROUND

In known wiper arrangements, the beam of a wiper arm is connected to a hub via a hinge or flex point at the hub. The elongated beam stretching from the hub to the wiper blade is typically a rigid structure of metal. This has a disadvantage from the perspective of pedestrian safety, aerodynamics, and weight.

There are hub arrangements with telescopic function that can move a wiper arm linearly relative to the hub while pivoting. For vehicles that have a large and aggressively curved windscreen, it is difficult for a wiper arrangement with such a hub arrangement to sweep over the windscreen.

The proposed technology aims at overcoming the abovementioned drawbacks.

### SUMMARY

In a first aspect of the proposed technology, a wiper arm for a wiper arrangement comprises: a base, or hub interface, a beam, or arm shaft, and a mount, or wiper-blade interface. The base is arranged or configured to be connected to a hub, or hub arrangement, of the wiper arrangement. The beam interconnects the base and the mount. The beam is elastically deformable, or forms a cantilever leaf spring between the base and the mount. The mount is arranged or configured to be connected to a wiper blade, or a mounting adapter of a wiper blade, or more specifically to lock, or fix, a wiper blade relative to the wiper arm. The wiper arm is a monolithic, or unitary, structure, or more specifically the base, beam, and mount jointly forms a monolithic, or unitary, structure. It is understood that the wiper arrangement may be for a vehicle, or more specifically for the windscreen of a vehicle..

A monolithic structure is understood as continuous structure that is not composed of separable parts. It is understood that the wiper arm is a non-articulated structure, and that there are no hinges or joints between the base and the mount. It is further understood that the beam is intended to elastically deform, or be elastically deformed, in use. It is further understood that the vehicle may have a windscreen, and that the windscreen may be curved, or more specifically doubly curved. It is further understood that wiper arrangement is for wiping the windscreen. Here, it is understood that the mounting adapter of the wiper blade forms part of the wiper blade.

In a second aspect of the proposed technology, a hub arrangement for a wiper arrangement for a vehicle comprises: a hub, a rotary-to-linear converter, or reciprocating mechanism, a linear-to-linear converter, or straight-line mechanism, and a wiper-arm support, or wiper-arm interface. The hub comprises, or has, a pivot that defines a pivot axis about which the hub, or the hub body specified below, is configured or intended to pivot. The linear-to-linear converter has an input part and an output part. The wiper-arm support is arranged or configured to be connected to a wiper arm, or a base of a wiper arm, or more specifically to lock, or fix, a wiper arm, or a base of a wiper arm, relative to the output part. The rotary-to-linear converter is operationally connected to the hub and arranged or configured to move the input part in an input stroke relative to the hub at a pivoting of the hub about the pivot axis relative to the vehicle. The linear-to-linear converter is arranged or configured to move the output part in an output stroke relative to the input part at an input stroke of the input part. The output stroke is greater, or longer, than the input stroke.

In a third aspect of the proposed technology, a wiper arrangement for a vehicle comprises a wiper arm and a hub arrangement according to the second aspect of the proposed technology, wherein the wiper arm, or a base of the wiper arm is connected to the wiper-arm support. The wiper arm may be a wiper arm according to the first aspect of the proposed technology.

The wiper arrangement may further comprise a wiper blade that is connected to, or more specifically locked, or fixed, to the mount. More specifically, the wiper blade may comprise a mounting adapter that is connected to, or more specifically locked, or fixed, to the mount. The wiper arrangement may further comprise an actuator that is operationally connected to the pivot of the hub of the hub arrangement and arranged or configured to pivot the hub about the pivot axis.

In a fourth aspect of the proposed technology, a vehicle with a windscreen comprises a wiper arrangement according to the third aspect of the proposed technology, wherein the wiper arrangement is arranged or configured to wipe the windscreen. The hub arrangement, or more specifically the hub, or the pivot of the hub, may be located at a centerline of the vehicle. The wiper arrangement may be a mono-wiper arrangement. This means that the wiper blade of the wiper arrangement is the only wiper blade that wipers the windscreen.

In the first aspect of the proposed technology, the beam may have a front side and an opposite rear side. It is understood that the front side is configured, or intended, to face away from the vehicle, or a windscreen of the vehicle, and that the rear side is intended to face towards the vehicle, or a windscreen of the vehicle. It is further understood that each of the front side and the rear side may extend from the base to the mount.

The beam may have a first edge and an opposite second edge, and the front side and an opposite rear side extend between the first edge and the second edge. It is understood that each of the front side, rear side, first edge and the second edge may extend between the base and the mount.

The beam may have an arc length and a cord length between the base and the mount. The beam may have an arch length to cord length ratio that is greater than 1.01, or greater than 1.02, and/or that is smaller than 1.03, or smaller than 1.04. It is understood that this is when the wiper arm is not in use.

The beam may have a width. It is understood that the width is transverse to the beam, and that it is between the first edge and the second edge of the beam. The width may decrease along the beam from the base to the mount. Worded differently the width may be smaller at the mount than at the base. The width may be smaller than 50 mm, or smaller than 45 mm, for example at the base. The width may be greater than 10 mm, or greater than 15 mm, for example at the mount.

The beam may have a thickness. It is understood that the thickness is transverse to the front side and/or the rear side of the beam. The thickness may be uniform over the beam. Alternatively, the thickness may increase along the beam from the base to the mount. The beam may have a mean thickness, and the thickness may vary by less than 20%, or 10%, from the mean thickness. It is understood that the mean thickness is transverse to the front side and/or the rear side of the beam, and that is determined over the complete beam. The thickness, or the mean thickness, may be greater than 1.6 mm, or greater than 1.8 mm. The thickness, or the mean thickness, may be smaller than 2.4 mm, or smaller than 2.6.

It is understood that the beam may be elongated, and that it extends between the base and the mount. The beam may define, or follow, a curve between the base to the mount. The direction of a tangent to the curve may change by more than 30°, or more than 35°, from the base to the mount, and/or the direction of a tangent to the curve may change by less than 45°, or less than 45°, from the base to the mount. Worded differently, the beam may be inclined by more than more than 30°, or more than 35°, between the base and the mount, and/or the beam may be inclined by less than 45°, or less than 45°, between the base and the mount. Worded differently, the beam may have an angle to the base, the angle to the base may change by more than 30°, or more than 35°, between the base and the mount, and/or the angle to the base may change by less than 45°, or less than 45°, between the base and the mount. It is understood that the above specifications are when the wiper arm is not in use.

The wiper arm may be arranged or configured such that the beam may define, or follow, a curve between the base to the mount when in use. The direction of a tangent to the curve may change by more than 2°, or more than 4°, from the base to the mount, and/or the direction of a tangent to the curve may change by less than 10°, or less than 14°, from the base to the mount. Worded differently, the wiper arm may be arranged or configured to be inclined by more than 2°, or more than 4° between the base and the mount when in use, and/or the wiper arm may be arranged or configured to be inclined by less than 10°, or less than 14°, between the base and the mount when in use. Worded differently, the beam may have an angle to the base when in use, the angle to the base may change by more than 2°, or more than 4° between the base and the mount, and/or the angle to the base may change by less than 10°, or less than 14°, between the base and the mount.

The front side of the beam may be doubly curved. Worded differently, the front side of the beam may be curved both transverse to and along the beam. The front side of the beam may be biconvex. Worded differently, the front side of the beam may have a positive Gaussian curvature. The front side may be smooth. This means that there are no edges or corners on the front side. The front side may be monotonic. This means that it does not undulate.

The rear side of the beam may be doubly curved. Worded differently, the rear side of the beam may be curved both transverse to and along the beam. The rear side of the beam may be biconvex. Worded differently, the rear side of the beam may have a positive Gaussian curvature. The rear side may be smooth. This means that there are no edges or corners on the rear side. The rear side may be monotonic. This means that it does not undulate.

The front side may have a transverse curvature, and the transverse curvature may increase along the beam from the base to the mount. Similarly, the rear side may have a transverse curvature, and the transverse curvature may increase from the base to the mount. It is understood that the transverse curvatures are between the first edge and the second edge of the beam.

The front side and the rear side may be isometric, or congruent.

It is specified that the beam is elastically deformable, or forms a cantilever leaf spring between the base and the mount. More specifically, the wiper arm may be arranged or configured to flex the beam towards or away from the vehicle, or the windscreen vehicle. It is understood that this is in use.

More specifically, the beam may be arranged or configured to elastically deform, or flex, transversely to, or normal to, the front surface and/or the rear surface. The beam may be rigid along, or parallel to, the front surface and/or the rear surface. Worded differently, the beam bay be arranged or configured to elastically deform, or flex, in a direction transverse to, or normal to, the front surface and/or the rear surface. The beam may be rigid in a direction along, or parallel to, the front surface and/or the rear surface

Worded differently, the wiper arm may be arranged or configured to elastically deform, or flex, transversely to, or normal to, the windscreen. The beam may be rigid along, or parallel to, the windscreen.

It is further understood that the wiper arm is intended to pivot around a pivot axis. Worded differently, the beam may be elastically deformable, or flexible, in a plane that is aligned with, that is parallel to, or that embeds, the pivot axis. The beam may be rigid transverse to, or normal to, the same plane.

The beam may be elastically deformable, or flexible, in a plane that is transverse, or normal, to the front side of the wiper arm and extends between the base and the mount. The beam may be rigid transverse, or normal, to a plane that is transverse, or normal, to the same plane.

The beam may be symmetric relative to a bisecting plane that extends between the base and the mount. This is advantageous if the wiper blade is a mono-wiper blade, or if the pivot axis is at a center line of the vehicle. It is understood that a bisecting plane divides an object into two congruent halves. The beam may be elastically deformable, or flexible, in the bisecting plane. The beam may be rigid transverse to, or normal to, the bisecting plane.

It is specified that base is arranged or configured to be connected to a hub, or hub arrangement. More specifically, the base may be arranged or configured to be connected to a wiper-arm support, such as the wiper-arm support described below. For example, the base may have a plurality of through holes. It is understood that the through holes may be arranged or configured to receive a fastener, such as a screw, that can bias the base against the wiper-arm support.

It is specified that the mount is arranged or configured to be connected to a wiper blade, or more specifically to a mounting adapter of a wiper blade. It is understood that the wiper blade, or the mounting adapter, may be a known and commercially available product.

The wiper arm may be a fiber reinforced structure. The wiper arm may be composed of, or formed from, a fiber reinforced polymer, or fiber reinforced plastic. Preferably, the polymer is a cured thermosetting resin. Preferably, the fibers are carbon fibers. The fibre reinforced polymer may have a Young's modulus of 200-500 GPa.

The carbon fibers may be in the form of sheets of carbon fibers, such as woven sheets of carbon fibers. The wiper arm, or the beam of the wiper arm, may comprise, or be formed from, overlapping sheets of carbon fibers that form a layered structure. A woven sheet of carbon fibers may form part of the base, the beam, and the mount. The sheet or sheets may be aligned with the front side and/or back side of the beam of the wiper arm.

In the second aspect of the proposed technology, it is understood that each of the rotary-to-linear converter and liner-to-linear converter may be mechanical. It is understood that the input stroke may be a reciprocating input stroke. The output stroke may be proportional to the input stroke. Worded differently, the linear-to-linear converter may be arranged or configured to scale a movement of the output part in direct proportion to a movement of the input part, or the linear-to-linear converter may be arranged or configured to scale the output stroke in direct proportion to the input stroke. In other words, the linear-to-linear converter may be a stroke multiplicator. The input stroke and the output stroke may be rectilinear. In other words, the linear-to-linear converter may be arranged or configured to move the input part along a straight line and to move the output part along a straight line, or the linear-to-linear converter may be arranged or configured to align the input stroke along a straight line and to align the output stroke along a straight line. The input stroke and the output stroke may be parallel. Worded differently, the linear-to-linear converter may be arranged or configured to move the output part in parallel with the input part. More specifically, or the linear-to-linear converter may be arranged or configured to align the input stroke and the output stroke in parallel. The input stroke and the output may be codirectional. Worded differently, the linear-to-linear converter may be arranged or configured to move the output part in the same direction as the input part, or the linear-to-linear converter may be arranged or configured to align the input stroke and the output stroke in the same direction. The input stroke and the output may be synchronous. Worded differently, the linear-to-linear converter may be arranged or configured to move the output part synchronously with the input part, or the linear-to-linear converter may be arranged or configured to time the output stroke synchronously with the input stroke. This means that the input stroke and the output stroke, or more specifically the input part and the output part, reach the top-dead-center, or full extension, at the same time, and bottom-dead-center, or full retraction, at the same time.

It is understood that the linear-to-linear converter may be telescopic relative to the hub. It is further understood that the linear-to-linear converter may have a retracted disposition and an extended disposition relative to the hub, and that the rotary-to-linear converter may be arranged or configured to reciprocate the linear-to-linear converter between these two dispositions. It is understood that each of the input part and the output part may have a retracted position and an extended position relative to the hub. More specifically, the rotary-to-linear converter may be arranged or configured to reciprocate the first input part between the retracted position and the extended position relative to the hub, and the rotary-to-linear converter and the linear-to-linear converter may be arranged or configured to jointly reciprocate the second input part between the retracted position and the extended position relative to the hub.

Each of the first part and the second part may move in a forward direction at a transition from the retracted position to the extended position, and in a rearward direction at a transition from the extended position to the retracted position.

It is understood that the input stroke may have an input stroke length relative to the hub and the output stroke may have an output stroke length relative to the input part. Here, the input stroke length is understood as the total distance, or more specifically the total linear distance, the first stroke covers between the ends of the first stroke, or between the top-dead-center and the bottom-dead-center, relative to the hub; and the output stroke length is understood as the total distance, or more specifically the total linear distance, the second stroke covers between the ends of the second stroke, or between the top-dead-center and the bottom-dead-center, relative to the second part. It is specified that the output stroke is longer than the input stroke. Worded differently, the output stroke length may be greater than the input stroke length.

More specifically, the output stroke length may be greater than the input stroke length by a factor that is greater than 1.5, greater than 2, or greater than 2.2. The output stroke length may be greater than the input stroke length by a factor that is smaller than 2.8, smaller than 3, or smaller than 3.5.

It is specified that the output stroke is longer than the input stroke. Worded differently, the linear-to-linear converter may have an ideal mechanical advantage between the input part and the output part that is less than one. More specifically, the ideal mechanical advantage between the input part and the output part may be less than 0.67, less than 0.50, or less than 0.45. The ideal mechanical advantage between the input part and the output part may be greater than 0.29, less than 0.33, or less than 0.36.

The hub may have, or comprise, a hub body. It is understood that the hub body may be a rigid structure. It is specified that the hub has a pivot. It is understood that the hub body configured or intended to pivot about the pivot axis. For example the pivot may be, or comprise, a pivot axle. It is understood that the pivot axle may be centered on, or concentric with, the pivot axis. It is further understood that the pivot, or the pivot axle, may be stationary, or fixed, relative to the rest of the hub. More specifically, the pivot, or the pivot axle, may be rigidly attached to the hub body. The pivot axis may extend from the hub body.

The hub may have, or comprise, a cover that is attached to the hub body. The cover may cover the rotary-to-linear converter. The cover may cover the linear-to-linear converter with the input stroke at the bottom dead center and the output stroke at the bottom dead center, with the linear-to-linear converter in the retracted disposition, or with each of the input part and the output part in the retracted position. It is understood that parts of the linear-to-linear converter may extend from the cover with the input stroke at the top dead center and the output stroke at the top dead center, with the linear-to-linear converter in the extended disposition, or with each of the input part and the output part in the extended position.

The rotary-to-linear converter may comprise a crank, or crank arrangement. The crank may be arranged or configured to convert a circular motion into a linear motion, or more specifically into the input stroke of the input part. It is understood that the liner motion may be a reciprocating linear motion.

The crank may comprise a crank axle, or crank shaft, a crank arm, or throw, a crank connector, or connecting rod. The crank axle may be rotationally supported relative to the hub, or the hub body. Worded differently the crank axle is connected to and rotatable relative to the hub, or the hub body. The crank axle, and the pivot, or pivot axle, may be eccentric. The crank arm is rotationally locked to, or rigidly attached to the crank axle. Worded differently, the crank arm is connected to and rotationally locked, or fixed, relative to the crank axle. It is understood that the crank arm may extend transversely to, or perpendicularly to, the crank axle. The crank connector is pivotably connected to the crank arm and to the input part of the liner-to-linear converter. Worded differently, the crank connector is connected to and pivotable relative to the crank arm and the input part of the liner-to-linear converter, or more specifically connected to and pivotable relative to the crank arm and the input rail specified below. It is understood that the crank arm and the crank connector may be arranged or configured to move in parallel planes.

The rotary-to-linear converter may comprise a crank drive. The crank drive may be arranged or configured to convert a pivoting of the hub, or the hub body, about the pivot, or pivot axle, to a circular motion, or more specifically into the circular motion that is converted to a linear motion by the crank. The crank drive may comprise a stationary gear and a drive pinion. The stationary gear is configured or intended to be fixed, or stationary, relative to the vehicle, and the drive pinion is rotationally locked to, or rigidly attached to the crank axle. Worded differently, the drive pinion is connected to and rotationally locked, or fixed, relative to the crank axle. It is understood that the stationary gear may have a circular internal gear profile, or more specifically that it may be a sector of a circular internal gear.

The crank drive may comprise a crank-drive body. The crank-drive body may comprise, or form, the stationary gear. More specifically, the input stationary gear may be attached to, or formed by, the crank-drive body. It is understood that it may be fixed, or stationary, relative to crank-drive body. It is further understood that the crank-drive body may be configured or intended to be fixed, or stationary, relative to the vehicle. It is further understood that the crank-drive body may be a rigid structure.

It is specified that the rotary-to-linear converter is operationally connected to the hub and the input part and arranged or configured to move the input part in an input stroke relative to the hub at a pivoting of the hub about the pivot axis relative to the vehicle. More specifically, the rotary-to-linear converter may be, or the or the crank and the crank drive may be, operationally connected to the hub and the input part and arranged or configured to move the input part in an input stroke relative to the hub, or the hub body, at a pivoting of the hub, or hub body, about the pivot axis relative to the vehicle, or the crank-drive body.

It is understood that the crank drive, or the crank-drive body, may be juxtaposed to the hub, or the hub body. It is further understood that the crank drive, or the crank-drive body, may be configured or intended to be positioned on the inside of the hub, or the hub body, relative to the vehicle, or between the hub, or the hub body, and the vehicle.

The hub, or the hub body, may be pivotably supported by the crank drive, or the crank-drive body. Worded differently the hub, or the hub body, is connected to and pivotable relative to the crank drive, or the crank-drive body. The crank drive, or the crank-drive body, may form a pivot bore, and the pivot axle may extend through the pivot bore. It is understood that the pivot axle may have an actuator interface, such as a spline, configured or intended to be connected to a wiper actuator and to be accessible on the inner side of the crank drive, or the crank-drive body, relative to the vehicle. It is further understood that the pivot axis, or the actuator interface, may extend from the crank drive, or the crank-drive body.

The crank-drive body may comprise, or form, an axial support arranged or configured to carry, or resist, axial loads from the hub, the hub body, or the pivot axle, that are parallel to the pivot axis. The crank-drive body may comprise, or form, a radial support arranged or configured to carry, or resist, radial loads from the hub, the hub body, or the pivot axle that are perpendicular to the pivot axis.

It is specified that the crank axle, and the pivot, or pivot axle, may be eccentric. It is understood that the drive pinion and the crank axle may be concentric. It is further understood that the stationary gear, or the circular internal gear profile, and the pivot, or pivot axle, may be concentric.

It is specified that the crank drive may be arranged or configured to convert a pivoting of the hub about the pivot to the circular motion that is converted to a linear motion by the crank. It is understood that the crank drive, or the stationary gear and the drive pinion cooperate, to rotate the drive pinion at a pivoting of the hub, or hub body, about the pivot, the pivot axle, or the pivot axis.

More specifically, the crank drive, or the stationary gear and the drive pinion, may be arranged or configured to convert a pivoting angular displacement, or sweep angle, of the hub, or hub body, about the pivot axis to a rotating angular displacement, or rotation angle, of the drive pinion, or the crank axle. The rotating angular displacement may be a factor 4.5, or a factor 5, greater than the pivoting angular displacement. The rotating angular displacement may be a factor 6, or a factor 6.5, smaller than the pivoting angular displacement.

It is specified that the wiper-arm support is arranged or configured to lock a wiper arm, or a base of a wiper arm, relative to the output part. The wiper-arm support may comprise a seat for the wiper arm, or the base of the wiper arm, and one or more fasteners. The seat and the fasteners are arranged to lock, or fix, wiper arm, or the base of the wiper arm, relative to the output part, or the output rail.

The seat may be locked, or fixed, relative to the output rail. More specifically, the seat may be attached to, or formed by, the output rail specified below. The fasteners may comprise a clamp, or bracket, that is arranged or configured to extend across the wiper arm, or the base of the wiper arm, and bias the wiper arm, or the base of the wiper arm, against the seat. The clamp may be located at the forward end of the output rail. The wiper arm, or the base of the wiper arm, may have a plurality of through holes. The seat, or the output rail, may form a plurality of threaded bores, and each of the threaded bores is arranged or configured to be aligned with a through hole of the plurality of through holes. The fasteners may comprise a plurality of screws, and each screw is arranged or configured to extend through a through hole and cooperate with a threaded bore to bias the wiper arm, or the base of the wiper arm, against the seat.

The input part may comprise an input rail, or input bar, and the output part may comprise an output rail, or output bar. It is understood that the wiper-arm support may be locked, or fixed, relative to the output rail. The input rail may be located between the output rail and the hub body in the retracted disposition. It is understood that each of the input rail and the output rail may be elongated. The output rail may be longer than the input rail. The output rail may be longer than the hub body in a direction along the output stroke. Each of the input rail and the output rail may be a flattened structure.

It is understood that each of the input rail and the output rail may be a rigid structure. It is further understood that the rotary-to-linear converter may be operationally connected to the hub and the input rail and arranged or configured to move the input rail in an input stroke relative to the hub at a pivoting of the hub about the pivot axis relative to the vehicle.

The linear-to-linear converter may comprise a rack-and-pinion arrangement, or mechanism, that operationally connects the input part, or input rail, and the output part, or output rail. It is understood that the rack-and-pinion arrangement is arranged or configured to move the output part, or output rail, in an output stroke relative to the input part, or input rail, at an input stroke of the input part, or input rail, and that the output stroke is greater, or longer, than the input stroke.

The rack-and-pinion arrangement may comprise an input pinion, an output pinion, an input rack, and an output rack. The input pinion is arranged or configured to cooperate with the input rack, and the output pinion is arranged or configured to cooperate with the output rack. The input pinion and the output pinion are concentric and locked, or fixed, relative to one another. For example, the input pinion and the output pinion may jointly form a monolithic, or unitary, structure. Worded differently, the input pinion and the output pinion may form a concentric and locked pinion pair. The input pinion and the output pinion may have fixed positions, or the pinion pair may have a fixed position, relative to the hub, or the hub body. The input rack is locked, or fixed, relative to the input part, or the input rail, and the output rack is locked, or fixed, relative to the output part, or the output rail. Each of the input pinion and the output pinion has a pitch diameter, and the pitch diameter of the output pinion is greater than the pitch diameter of the input pinion.

The pitch diameter of the output pinion may be greater than the pitch diameter of the input pinion by a factor that is greater than 1.5, greater than 2, or greater than 2.2. The pitch diameter of the output pinion may be greater than the pitch diameter of the input pinion by a factor that is smaller than 2.8, smaller than 3, or smaller than 3.7.

It is understood that the input pinion and the output pinion may be juxtaposed. It is further understood that each of the input pinion, output pinion, input rack, and output rack may have teeth, and that the teeth of the input pinion may mesh with the teeth of the input rack, and that the teeth of the output pinion may mesh with the teeth of the output rack. For example, the teeth may be helical.

It is understood that the input pinion and the output pinion, or the pinion pair, may be rotationally supported relative to the hub, or the hub body. It is understood that the input pinion and the output pinion, or the pinion pair, may be arranged or configured to rotate about a pinion axis, and that the input pinion and the output pinion, or the pinion pair, may be concentric with the pinion axis. The pinion axis may be aligned with, or parallel to the pivot axis. The pinion axis may be transverse to, or perpendicular to, the first stroke and the second stroke.

More specifically, the rack-and-pinion arrangement may comprise a pinion support, and the pinion support rotationally supports the input pinion and the output pinion, or the pinion pair, relative to the hub, or the hub body. It is understood that this is relative to the hub, or the hub body. The pinion support may rotationally connect the input pinion and the output pinion, or the pinion pair, to the hub, or the hub body. The pinion support may fix the position of the input pinion and the output pinion, or the pinion pair, relative to the hub, or the hub body. The pinion support may be arranged or configured to allow the input pinion and the output pinion, or the pinion pair, to rotate about the pinion axis. It is understood that the input pinion and the output pinion, or the pinion pair, may be concentric with the pinion axis. As specified above, the pinion axis may be aligned with, or parallel to the pivot axis, and he pinion axis may be transverse to, or perpendicular to, the first stroke and the second stroke. pivot axis.

For example, the pinion support may comprise a pinion shaft and one or more bearings, such as radial rolling-elements bearings. The pinion shaft may be fixed to the hub, or the hub body, the one or more bearings may rotationally connect the input pinion and the output pinion to the pinion shaft, and the input pinion and the output pinion are fixed to, or attached, to one another. Alternatively, the pinion shaft may be fixed to the input pinion and the output pinion, or the pinion pair, and the one or more bearings may rotationally connect the pinion shaft to the hub, or the hub body. It is understood that the pinion shaft and the bearings may be concentric with the pinion axis.

Each of the input rail and the output rail may have a first side and an opposite second side. The first side of the input rail and the first side of the output rail may face in the same direction.

It is specified that each of the first part and the second part may move in a forward direction at a transition from the retracted position to the extended position, and in a rearward direction at a transition from the extended position to the retracted position. Each of the input rail and the output rail may have a forward end and an opposite rearward end. The forward end may face in the forward direction and the rearward end may face in the rearward direction. It is understood that the first side respectively the second side may extend between the forward end and the rearward end.

It is understood that the input rack and an output rack may be straight. The input rail and the output rail may be aligned, or parallel. The input rack and the output rack may face in the same direction. Worded differently, the input rack and the output rack are located on the same side of the combined input pinion and an output pinion, or the pinion pair. For example, the input rack is located on the first side of the input rail and the output rack is located on the first side of the output rail, or the input rack is located on the second side of the input rail and the output rack is located on the second side of the output rail.

It is specified that the input rack may be locked relative to the input rail, and the output rack may be locked relative to the output rail. More specifically, the input rack may be attached to, or formed by, the input rail, and the output rack may be attached to, or formed by, the output rail.

The linear amplifier may further comprise an additional rack-and-pinion arrangement, or mechanism, that operationally connects the input part, or input rail, and the output part, or output rail. It is understood that the additional rack-and-pinion arrangement is arranged or configured to move the output part, or output rail, in the output stroke relative to the input part, or input rail, at an input stroke of the input part, or input rail, and that the output stroke is greater, or longer, than the input stroke.

The additional rack-and-pinion arrangement may comprise an additional input pinion, an additional output pinion, an additional input rack, and an additional output rack. The additional input pinion is arranged or configured to cooperate with the additional input rack, and the additional output pinion is arranged or configured to cooperate with the additional output rack. The additional input pinion and the additional output pinion are concentric, and locked, or fixed, relative to one another. Worded differently, the additional input pinion and the additional output pinion may form a concentric and locked additional pinion pair. The additional input pinion and the additional output pinion, or the additional pinion pair, may have a fixed position relative to the hub, or the hub body. The additional input rack is locked, or fixed, relative to the input part, or the input rail, and the additional output rack is locked, or fixed, relative to the output part, or the output rail.

The additional input pinion and the additional output pinion, or the additional pinion pair may be abreast with the input pinion and the output pinion, or the pinion pair, relative to the first stroke, or the input axis described below.

The additional rack-and-pinion arrangement may be arranged or configured as the rack-and-pinion arrangement described above. It is understood that it may comprise any of the features or components of the rack-and-pinion arrangement. For example, the additional input pinion and the additional output pinion may be juxtaposed, and the additional input pinion and the additional output pinion, or the additional pinion pair, may be rotationally supported relative to the hub, or the hub body, and the additional input pinion and the additional output pinion, or the additional pinion pair, may be arranged or configured to rotate about an additional pinion axis, and that the additional input pinion and the additional output pinion, or the additional pinion pair, may be concentric with the additional pinion axis. The additional rack-and-pinion arrangement may comprise an additional pinion support, the additional pinion support rotationally supports the additional input pinion and the additional output pinion, or the additional pinion pair, and the additional pinion support may comprise an additional pinion shaft and one or more additional bearings, such as radial rolling-elements bearings.

The hub arrangement may comprise an input linear guide arranged our configured to guide the input stroke along an input axis relative to the hub, or the hub body. More specifically, the input linear guide may be arranged our configured to guide the input part, or the input rail, along an input axis relative to the hub, or the hub body. The input linear guide may carry the input part, or input rail, relative to the hub, or the hub body, and it may space the input part, or input rail, apart from the hub, or the hub body.

The input linear guide may comprise a two or more first wheels, or first pulleys, a two or more second wheels, or second pulleys, a first rail guide, and a second rail guide. The first wheels are arranged or configured to cooperate with the first rail guide, and the second wheels are arranged or configured to cooperate with the second rail guide. It is understood that the first wheels contact the first rail guide and that the second wheels contact the second rail guide. The first wheels, second wheels, first rail guide, and second rail guide, may jointly carry the input part, or input rail, relative to the hub, or the hub body, and they may jointly space the input part, or input rail, apart from the hub, or the hub body.

Each of the first wheels and the second wheels, may have a fixed position relative to the hub, or the hub body. It is understood that each of the first wheel and the second wheels may be rotationally supported relative to the hub, or the hub body. Each of the first wheels may cooperate with, or contact, the first rail guide over a complete input stroke. Similarly, each of the second wheels may cooperate with, or contact, the second rail guide over a complete input stroke. The first wheels may be spaced apart from one another in a direction aligned with, or parallel to, the input axis. Similarly, the second wheels may be spaced apart from one another in a direction aligned with, or parallel to, the input axis.

The first rail guide and the second rail guide may be locked, or fixed, relative to the input rail. More specifically, the first rail guide and the second rail guide may be attached to, or formed by, the input rail. The first rail guide and the second rail guide may be straight. The first rail guide and the second rail guide may be aligned, or parallel. The first rail guide and the second rail guide may be aligned with, or parallel to, the input axis. The first rail guide and the second rail guide may face in opposite directions. The first rail guide may be located at the first side of the input rail and the second rail guide may be located at the second side of the input rail. The first rail guide may face in the same direction as the first side of the input rail, and the second rail guide may face in the same direction as the second side of the input rail. The first rail guide and the second rail guide may be located between the two or more first wheels and the two or more second wheels. Alternatively, the first rail guide may face in the opposite direction as the first side of the input rail, and the second rail guide may face in the opposite direction as the second side of the input rail. The two or more first wheel and the two or more second wheels may be located between the first rail guide and the second rail guide.

The hub arrangement may comprise an output linear guide arranged our configured to guide the output stroke along an output axis relative to the hub, or the hub body. More specifically, the output linear guide may be arranged our configured to guide the output part, or the output rail, along an output axis relative to the hub, or the hub body. The output linear guide may carry the output part, or output rail, relative to the hub, or the hub body, and it may space the output part, or output rail, apart from the hub, or the hub body, and/or apart from the input part, or input rail.

The output linear guide may comprise a two or more first wheels, or first pulleys, a two or more second wheels, or second pulleys, a first rail guide, and a second rail guide. The first wheels are arranged or configured to cooperate with the first rail guide, and the second wheels are arranged or configured to cooperate with the second rail guide. It is understood that the first wheels contact the first rail guide and that the second wheels contact the second rail guide. The first wheels, second wheels, first rail guide, and second rail guide, may jointly carry the output part, or output rail, relative to the hub, or the hub body, and they may jointly space the output part, or output rail, apart from the hub, or the hub body.

Each of the first wheels and the second wheels, may have a fixed position relative to the hub, or the hub body. It is understood that each of the first wheel and the second wheels may be rotationally supported relative to the hub, or the hub body. Each of the first wheels may cooperate with, or contact, the first rail guide over a complete output stroke. Similarly, each of the second wheels may cooperate with, or contact, the second rail guide over a complete output stroke. The first wheels may be spaced apart from one another in a direction aligned with, or parallel to, the output axis. Similarly, the second wheels may be spaced apart from one another in a direction aligned with, or parallel to, the output axis.

The first rail guide and the second rail guide may be locked, or fixed, relative to the output rail. More specifically, the first rail guide and the second rail guide may be attached to, or formed by, the output rail. The first rail guide and the second rail guide may be straight. The first rail guide and the second rail guide may be aligned, or parallel. The first rail guide and the second rail guide may be aligned with, or parallel to, the output axis. The first rail guide and the second rail guide may face in opposite directions. The first rail guide may be located at the first side of the output rail and the second rail guide may be located at the second side of the output rail. The first rail guide may face in the same direction as the first side of the output rail, and the second rail guide may face in the same direction as the second side of the output rail. The first rail guide and the second rail guide may be located between the two or more first wheels and the two or more second wheels.

The hub arrangement may comprise an intermediate linear guide arranged our configured to guide the output stroke along an output axis relative to the input part, or the input rail. More specifically, the intermediate linear guide may be arranged our configured to guide the output part, or the output rail, along an output axis relative to the input part, or the input rail. The intermediate linear guide may carry the output part, or output rail, relative to the input part, or the input rail, and it may space the output part, or output rail, apart from the input part, or input rail.

The output linear guide may comprise a two or more first wheels, or first pulleys, a two or more second wheels, or second pulleys, a first rail guide, and a second rail guide. The first wheels are arranged or configured to cooperate with the first rail guide, and the second wheels are arranged or configured to cooperate with the second rail guide. It is understood that the first wheels contact the first rail guide and that the second wheels contact the second rail guide. The first wheels, second wheels, first rail guide, and second rail guide, may jointly carry the output part, or output rail, relative to the input part, or the input rail, and they may jointly space the output part, or output rail, apart from the input part, or the input rail.

Each of the first wheels and the second wheels, may have a fixed position relative to the input part, or the input rail. It is understood that each of the first wheel and the second wheels may be rotationally supported relative to input part, or the input rail. Each of the first wheels may cooperate with, or contact, the first rail guide over a complete output stroke. Similarly, each of the second wheels may cooperate with, or contact, the second rail guide over a complete output stroke. The first wheels may be spaced apart from one another in a direction aligned with, or parallel to, the output axis. Similarly, the second wheels may be spaced apart from one another in a direction aligned with, or parallel to, the output axis.

The first rail guide and the second rail guide may be locked, or fixed, relative to the output rail. More specifically, the first rail guide and the second rail guide may be attached to, or formed by, the output rail. The first rail guide and the second rail guide may be straight. The first rail guide and the second rail guide may be aligned, or parallel. The first rail guide and the second rail guide may be aligned with, or parallel to, the output axis. The first rail guide and the second rail guide may face in opposite directions. The first rail guide may be located at the first side of the output rail and the second rail guide may be located at the second side of the output rail. Alternatively, the first rail guide may face in the opposite direction as the first side of the output rail, and the second rail guide may face in the opposite direction as the second side of the output rail. The two or more first wheel and the two or more second wheels may be located between the first rail guide and the second rail guide.

It is understood that the input axis and the output axis may be parallel.

For each of the input linear guide, the output linear guide, and the intermediate linear guide, each of the first wheels may have a thread with a profiled cross section. It is understood that the first wheels may have the same profiled cross section. The first rail guide may have a linear contact geometry that matches, or conforms to, the profiled cross sections of the first wheels. For example the thread of the first wheel may have a V-shaped cross section, and the rail guide may have a V-shaped contact geometry.

Similarly, for each of the input linear guide, the output linear guide, and the intermediate linear guide, each of the second wheels may have a thread with a profiled cross section. It is understood that the second wheels may have the same profiled cross section. The second rail guide may have a linear contact geometry that matches, or conforms to, the profiled cross sections of the second wheels. For example the thread of the second wheel may have a V-shaped cross section, and the rail guide may have a V-shaped contact geometry.

### BRIEF DESCRIPTION OF THE DRAWINGS

A more complete understanding of the abovementioned and other features and advantages of the proposed technology will be apparent from the following detailed description of preferred embodiments of the proposed technology in conjunction with the appended drawings, wherein:
Fig. 1 is a perspective view of an embodiment of a wiper arrangement,
Fig. 2 is a perspective view of the wiper arm and parts of the hub arrangement of the wiper arrangement,
Figs. 3a and 3b are a top view respective a side view of the wiper arm,
Fig. 4 is a side view of the wiper arm in use,
Figs. 5a to 5c are transverse cross sections of the beam of the wiper arm in use,
Figs. 6a and 6b are a side view respectively a top view of parts of the hub arrangement,
Figs. 7a to 7c are a perspective view of part of the hub arrangement with the linear-to-linear converter in the retracted disposition, between the retracted disposition and the extended disposition, and in the extended disposition,
Figs. 8a and 8b are a perspective view of parts of the hub arrangement, and
Figs. 9a to 9c are a perspective view of parts of the hub arrangement, a perspective view of parts of the crank drive of the hub arrangement, and a cross-sectional view of the crank drive of the hub arrangement.

### DETAILED DESCRIPTION OF THE DRAWINGS

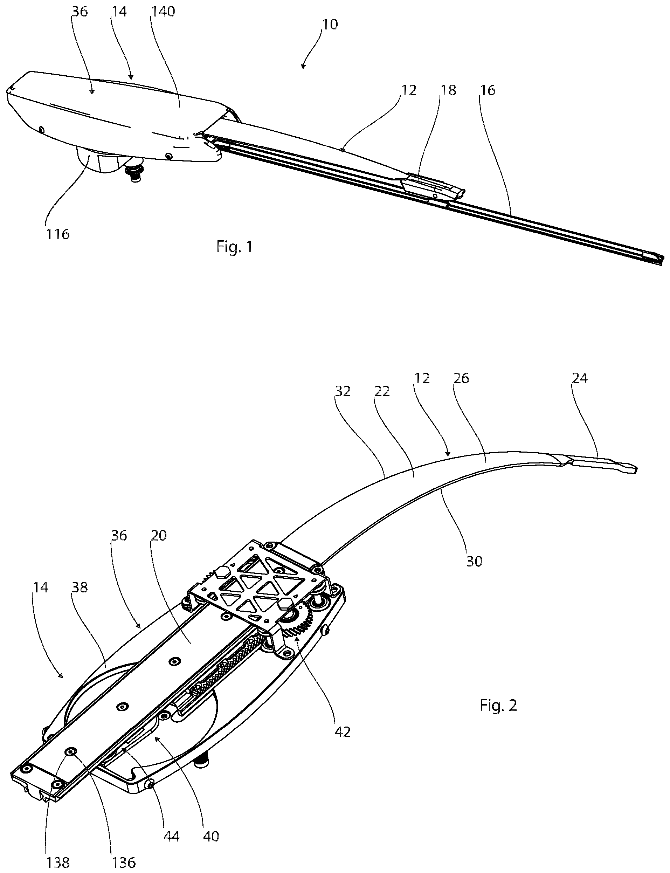

Fig. 1 shows wiper arrangement 10 for a vehicle (not shown) that has a wiper arm 12, a hub arrangement 14, and a wiper blade 16. The wiper arm 12 has a base 20, a beam 22, and a mount 24, see Fig. 2. The beam 22 interconnects the base 20 and the mount 24. The base 20 of the wiper arm 12 is connected and fixed to the hub assembly, and the wiper blade 16 has a mounting adapter 18 that is connected and fixed to the mount 24 of the wiper arm 12.

The wiper arm 12 is a monolithic and non-articulated structure, and there are no hinges or joints between the base 20 and the mount 24. The beam 22 forms a cantilever leaf spring between the base 20 and the mount 24 and is elastically deformable.

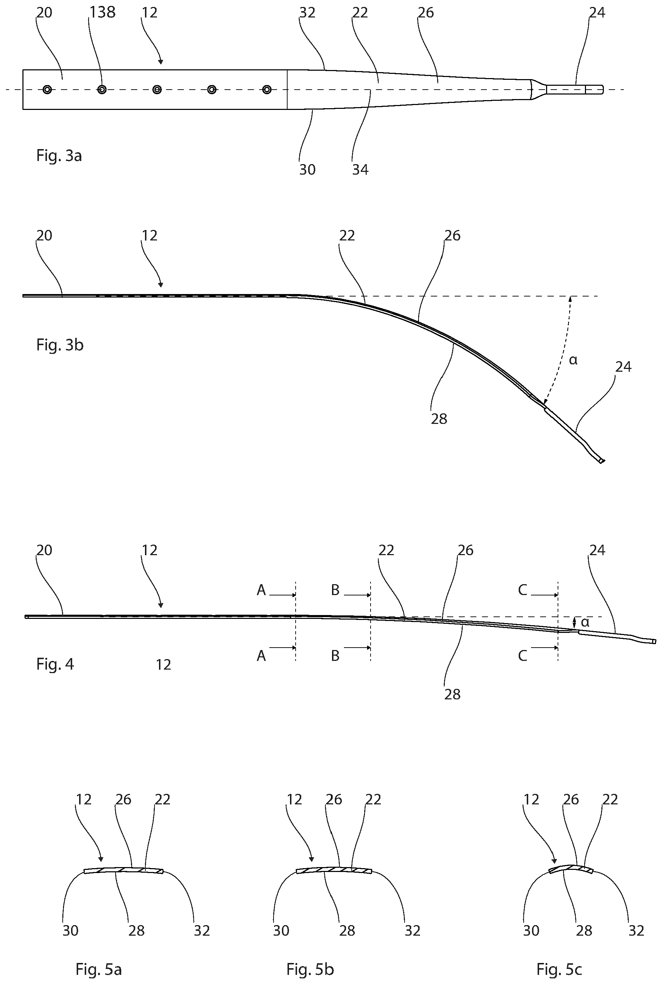

A top view respective a side view of the wiper arm 12 are shown Figs. 3a and 3b. The beam 22 has a front side 26 and an opposite rear side 28. The front side 26 faces away from the vehicle and the rear side 28 faces towards the vehicle in use. It further has a first edge 30 and an opposite second edge 32. The front side 26 and an opposite rear side 28 extend between the first edge 30 and the second edge 32, and each of the front side 26, rear side 28, first edge 30 and the second edge 32 extends between the base 20 and the mount 24.

The wiper arm 12 is of carbon-fiber reinforced polymer. The carbon fibers are in the form of sheets of carbon fibers, and the wiper arm 12 has been formed from overlapping sheets of carbon fibers that form a layered structure. A sheet form part of the base 20, the beam 22, and the mount 24, and the base 20. The sheets are aligned with the front side 26 and the back side of the beam 22 of the wiper arm 12.

The beam 22 has an arc length and a cord length between the base 20 and the mount 24 of that are 290 mm respective 284 mm. This means that the beam 22 has an arch length to cord length ratio that is about 1.025.

The beam 22 has a width transverse to the elongated beam 22 and between the first edge 30 and the second edge 32. The width decreases along the beam 22 from the base 20 to the mount 24, as shown in Fig. 3a. The width is 40 mm at the base 20 and 20 mm at the mount 24. The thickness of the beam 22 transverse to the front side 26 and/or the rear side 28 of the beam 22 increases along the beam 22 from the base 20 to the mount 24. The beam 22 has a thickness at the base 20 of about 2.0 mm and a thickness of about 2.3 mm at the mount 24.

Figs. 1 and 4 show the shape of the wiper arm 12 in use with the wiper blade 16 engaging the windscreen (not shown) of a vehicle (not show), and Figs. 2 and 3b shows the shape of the wiper arm 12 when not in use. The elongated beam 22 follows a curve between the base 20 to the mount 24. When the wiper arm 12 is not in use, the direction of a tangent to the curve changes by about 42 ° when going from the base 20 to the mount 24, as shown by the angle α in Fig. 3b. When the wiper arm 12 is in use, the beam 22 is elastically deformed and the tangent to the curve between the base 20 to the mount 24 changes by about 6 ° when going from the base 20 to the mount 24, as shown by the angle α in Fig. 4.

The front side 26 and the rear side 28 of the beam 22 are both doubly curved. The front side 26 is biconvex and the rear side 28 is biconcave. Both are smooth and monotonic without any edges, corners or undulating parts. The front side 26 and the rear side 28 are isometric and congruent. Transverse cross sections of the beam 22 of the wiper arm 12 in use are indicated in Fig. 4. The cross section AA is shown in Fig. 5a, the cross section BB is shown in Fig. 5b, and the cross section CC is shown in Fig. 5c. Both the front side 26 and the rear side 28 has a transverse curvature between the first edge 30 and the second edge 32 that increases along the beam 22 from the base 20 to the mount 24, as shown in Figs. 5a to 5c.

The beam 22 is symmetric relative to a bisecting plane 34 that extends between the base 20 and the mount 24, as shown in Fig. 3a. Arranged as described here, the beam 22 is elastically deformable and flexible in the bisecting plane 34 and rigid normal to the bisecting plane 34. More generally, the beam 22 is configured to flex the beam 22 towards or away from the windscreen of a vehicle when in use, and to elastically deform and flex normal to the front surface and the rear surface of the beam 22. The beam 22 is rigid parallel to the windscreen of the vehicle, and rigid in a direction along the front surface of the beam 22.

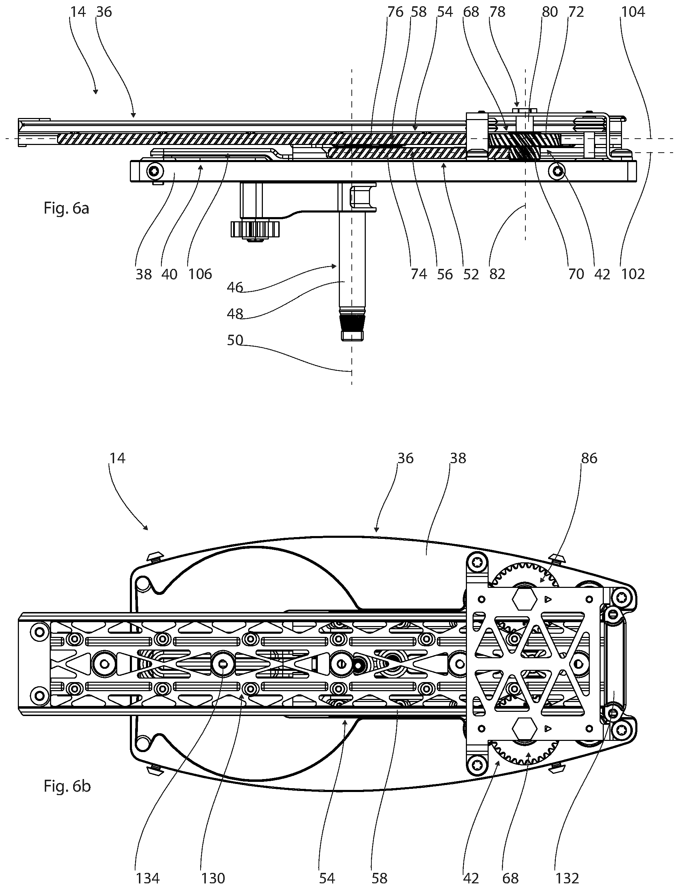

The beam 22 is rigid along, or parallel to, the front surface and/or the rear surface. Worded differently, the beam 22 bay be arranged or configured to elastically deform, or flex, in a direction transverse to, or normal to, the front surface and/or the rear surface. The beam 22 bay rigid in a direction along, or parallel to, the front surface and/or the rear surface. When the wiper arm 12 is connected to the hub arrangement 14 further described below, see for example Fig. 6a, the beam 22 is elastically deformable and flexible in a plane that embeds the pivot axis 50, and rigid normal to the same plane.

The base 20 has a plurality of through holes 138 that each can receive a fastener in the form of a screw for biasing the base 20 against the wiper-arm support 44 of the hub arrangement 14 that is further described below.

A side view respectively a top view of parts of the hub arrangement 14 are shown in Figs. 6a and 6b. The hub arrangement 14 has a hub 36, a rotary-to-linear converter 40, a linear-to-linear converter 42, and a wiper-arm support 44. The hub 36 as a pivot 46 that defines a pivot axis 50 about which the hub 36 is intended to pivot 46. The hub 36 has a hub body 38 a rigid structure. The pivot 46 is a pivot axle 48 that is concentric with the pivot axis 50, that is rigidly attached to the hub body 38, and that extends from the hub body 38.

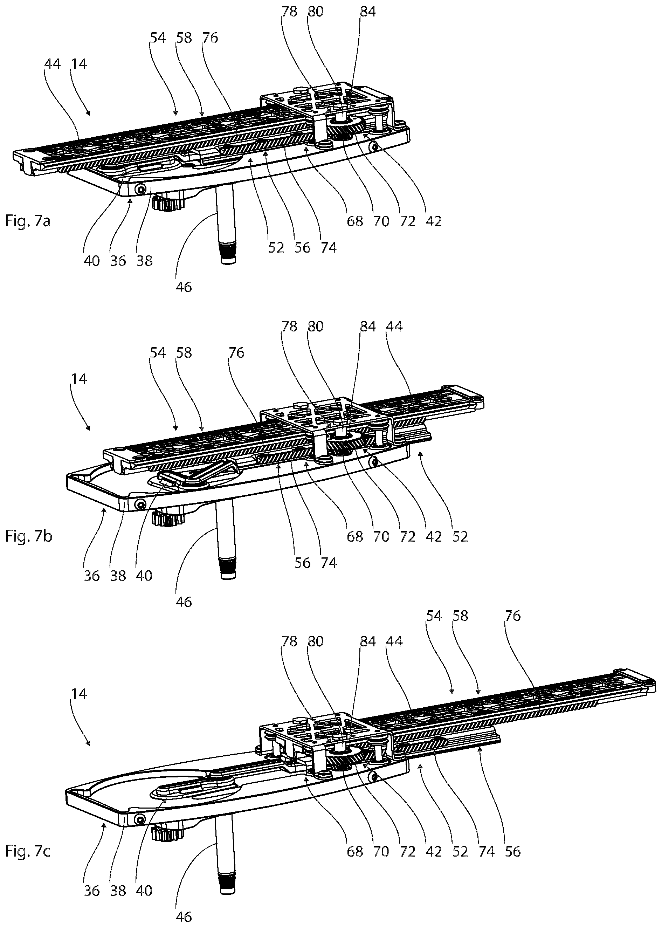

The linear-to-linear converter 42 has a telescopic function. In Fig. 7a it is shown its retracted disposition, in Fig. 7b it is shown in a disposition between the retracted disposition and the extended disposition, and in Fig. 7c it is shown in extended disposition.

The linear-to-linear converter 42 has an input part 52 and an output part 54. The input part 52 has an elongated input rail 56 and the output part 54 has an elongated output rail 58. The input rail 56 and the output rail 58 are flattened and rigid structures. The input rail 56 is located between the output rail 58 and the hub body 38 in the retracted disposition, as shown in Fig. 7a.

Each of the input rail 56 and the output rail 58 has a first side 60 and an opposite second side 62, and the first side 60 of the input rail 56 and the first side 60 of the output rail 58 face in the same direction. Each of the input rail 56 and the output rail 58 also has a rearward end 64 and an opposite forward end 66 relative to the hub 36.

The linear amplifier further has a rack-and-pinion arrangement 68 located on the first side 60 of the input rail 56 respective the output rail 58. The rack-and-pinion arrangement 68 has an input pinion 70 an output pinion 72 that are juxtaposed, concentric, and fixed relative to one another and forms a locked pinion pair, see Figs. 6a and 7a to 7c. The pitch diameter of the output pinion 72 is about 2.5 greater than the pitch diameter of the input pinion 70. It further has a straight input rack 74 that is fixed to and formed by the input rail 56, and a straight output rack 76 that is fixed to and formed by the output rail 58. The input rail 56 and the output rail 58 are parallel. The input rack 74 and the output rack 76 face in the same direction and are located at the first side 60 of the input rail 56 respectively the output rail 58.

The input pinion 70 and the input rack 74 have helical teeth that mesh, and the output pinion 72 and the output rack 76 have helical teeth that mesh. This way, the input pinion 70 and the output pinion 72 are arranged to cooperate with the input rack 74 respectively the output rack 76, and the rack-and-pinion arrangement 68 operationally connects the input rail 56 and the output rail 58.

The rack-and-pinion arrangement 68 has a pinion support 78 with a pinion shaft 80 that is fixed to the hub body 38 and a radial rolling-element bearing 84 that rotationally connects the input pinion 70 and the output pinion 72 to the pinion shaft 80. This way, the pinion support 78 rotationally supports the input pinion 70 and the output pinion 72 relative to the hub body 38 and allows and fixes the position of the input pinion 70 and the output pinion 72 relative to the hub body 38. The pinion pair can are concentric with and can rotate about a pinion axis 82 that is parallel to the pivot axis 50, see Fig. 6a.

The linear amplifier further has an additional rack-and-pinion arrangement 86 located on the second side 62 of the input rail 56 respective the output rail 58 and arranged as the rack-and-pinion arrangement 68.

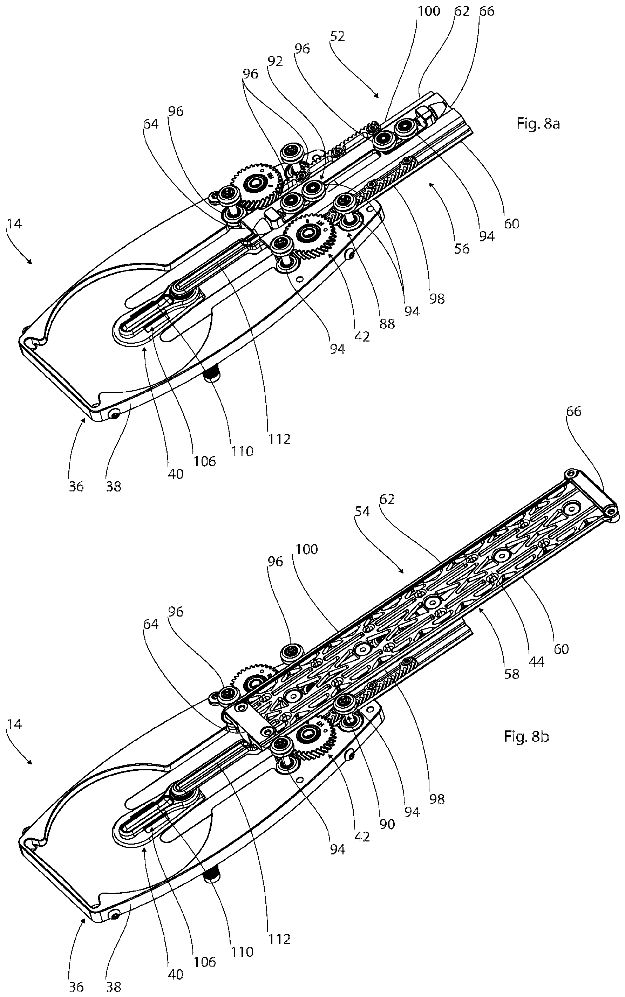

The hub arrangement 14 has an input linear guide 88, an output linear guide 90, and an intermediate linear guide 92. Each of the guides 88, 90, and 92 has two first wheels 94, two second wheels 96, a first rail guide 98, and a second rail guide 100, see Figs.8a and 8b. The first rail guide 98 and the second rail guide 100 are straight and parallel, and they face in opposite directions.

The first wheels 94 contact the first rail guide 98 and the second wheels 96 contact the second rail guide 100. For each guide 88, 90, and 92, the first wheels 94 has a thread with a V-shaped cross section, and the first rail guide 98 has a linear contact geometry that matches and conforms to the profiled cross sections of the first wheels 94. Similarly, the second wheels 96 has a thread with a V-shaped cross section, and the second rail guide 100 has a linear contact geometry that matches and conforms to the profiled cross sections of the second wheels 96. This way, the first wheels 94 are configured to cooperate with the first rail guide 98, and the second wheels 96 are arranged or configured to cooperate with the second rail guide 100.

In the input linear guide 88, each of the first wheels 94 and the second wheels 96 have a fixed position relative to the hub body 38 and are rotationally supported relative to the hub body 38, see Fig. 8a. Each of the first wheels 94 cooperates with the first rail guide 98 over a complete input stroke of the input part 52, and each of the second wheels 96 cooperates with the second rail guide 100 over a complete input stroke of the input part 52. The first wheels 94 are spaced apart from one another and the second wheels 96 are spaced apart from one another.

The first rail guide 98 and the second rail guide 100 are fixed relative to and formed by the input rail 56. The first rail guide 98 is located at the first side 60 of the input rail 56 and the second rail guide 100 is located at the second side 62 of the input rail 56. The first rail guide 98 faces in the same direction as the first side 60 of the input rail 56, and the second rail guide 100 faces in the same direction as the second side 62 of the input rail 56. The first rail guide 98 and the second rail guide 100 are located between the pair of first wheels 94 and the pair of second wheels 96. The first wheels 94, second wheels 96, first rail guide 98, and second rail guide 100, jointly carry the input rail 56 relative to the hub body 38 and jointly space the input rail 56 apart from the hub body 38.

With these adaptations, the input linear guide 88 is configured to guide the input part 52, and in extension the input stroke, along an input axis 102 relative to the hub body 38, see Fig. 6a.

In the output linear guide 90, each of the first wheels 94 and the second wheels 96 have a fixed position relative to the hub body 38 and are rotationally supported relative to the hub body 38, see Fig. 8b. Each of the first wheels 94 cooperates with the first rail guide 98 over a complete output stroke of the output part 54, and each of the second wheels 96 cooperates with the second rail guide 100 over a complete output stroke of the output part 54. The first wheels 94 are spaced apart from one another and the second wheels 96 are spaced apart from one another.

The first rail guide 98 and the second rail guide 100 are fixed relative to and formed by the output rail 58. The first rail guide 98 is located at the first side 60 of the output rail 58 and the second rail guide 100 is located at the second side 62 of the output rail 58. The first rail guide 98 faces in the same direction as the first side 60 of the output rail 58, and the second rail guide 100 faces in the same direction as the second side 62 of the output rail 58. The first rail guide 98 and the second rail guide 100 are located between the pair of first wheels 94 and the pair of second wheels 96. The first wheels 94, second wheels 96, first rail guide 98, and second rail guide 100, jointly carry the output rail 58 relative to the hub body 38 and jointly space the input rail 56 apart from the hub body 38 and the input rail 56.

With these adaptations, the output linear guide 90 is configured to guide the output part 54, and in extension the output stroke, along an output axis 104 relative to the hub body 38, see Fig. 6a.

In the intermediate linear guide 92, each of the first wheels 94 and the second wheels 96 have a fixed position relative to the input rail 56 and are rotationally supported relative to the input rail 56, see Fig. 8b. Each of the first wheels 94 cooperates with the first rail guide 98 over a complete output stroke of the output part 54, and each of the second wheels 96 cooperates with the second rail guide 100 over a complete output stroke of the output part 54. The first wheels 94 are spaced apart from one another and the second wheels 96 are spaced apart from one another.

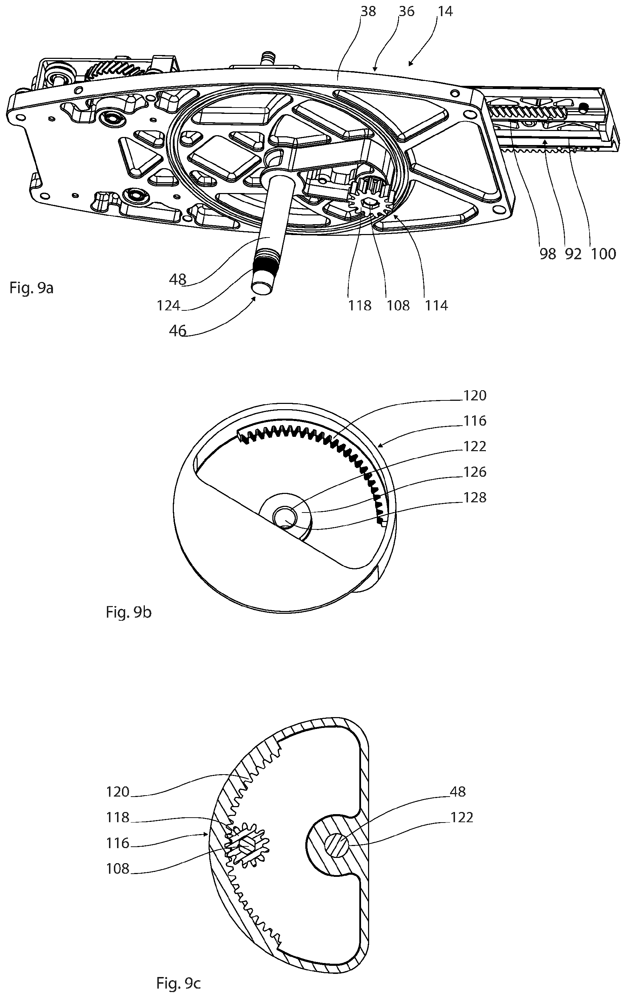

The first rail guide 98 and the second rail guide 100 are fixed relative to and formed by the output rail 58, see Fig. 9a. The first rail guide 98 is located at the first side 60 of the input rail 56 and the second rail guide 100 is located at the second side 62 of the input rail 56. The first rail guide 98 faces in the opposite direction as the first side 60 of the input rail 56, and the second rail guide 100 faces in the opposite direction as the second side 62 of the input rail 56. The pair of first wheels 94 and the pair of second wheels 96 are located between the first rail guide 98 and the second rail guide 100. The first wheels 94, second wheels 96, first rail guide 98, and second rail guide 100, jointly carry the input rail 56 relative to the input rail 56 and jointly space the output rail 58 apart from the input rail 56.

With these adaptations, the intermediate linear guide 92 is configured to guide the output part 54, and in extension the output stroke, along the output axis 104 relative to the input rail 56, see Fig. 6a.

Arranged as described above, the linear-to-linear converter 42 is configured to move the output part 54 in an output stroke relative to the input part 52 at an input stroke of the input part 52, wherein the output stroke is greater than the input stroke. More specifically, the input stroke has an input stroke length relative to the hub 36, the output stroke has an output stroke length relative to the input part 52.

The output stroke is proportional to the input stroke and the linear-to-linear converter 42 is a stroke multiplicator configured to scale the output stroke in direct proportion to the input stroke. The input stroke and the output stroke are rectilinear, parallel, codirectional, and synchronous. The linear-to-linear converter 42 is telescopic relative to the hub 36 and has a retracted disposition and an extended disposition relative to the hub 36, see Figs. 7a and 7c. Each of the input part 52 and the output part 54 has a retracted position and an extended position relative to the hub 36, see Figs. 7a and 7c. Each of the first part and the second part moves in a forward direction at a transition from the retracted position to the extended position, and in a rearward direction at a transition from the extended position to the retracted position.

It is specified above that the pitch diameter of the output pinion 72 is about 2.5 greater than the pitch diameter of the input pinion 70. This means that the rack-and-pinion arrangement 68 is configured to move the output rail 58 in an output stroke relative to the input rail 56 at an input stroke of the input rail 56 relative to the hub body 38, and the output stroke is greater than the input stroke by a factor of about 2.5. More specifically, the output stroke length is greater than the input stroke length by a factor that is about 2.5, and the ideal mechanical advantage between the input part 52 and the output part 54 is about 0.4.

The rotary-to-linear converter 40 has a crank 106 with a crank axle 108, a crank arm 110, and crank connector 112, see Fig. 7a to 7c, 8a, and 8b. The crank axle 108 is rotationally supported relative to the hub body 38. The crank axle 108 and the pivot axle 48 are eccentric and parallel. The crank arm 110 is connected to and rotationally locked relative to the crank axle 108, and it extends transversely, or perpendicularly, the crank axle 108. The crank connector 112 is connected to and pivotable relative to the crank arm 110 and the input rail 56. This way, the crank 106 is configured to convert a circular motion into a reciprocating linear motion, or more specifically into the input stroke of the input part 52.

The rotary-to-linear converter 40 further has a crank drive 114 with a crank-drive body 116 and a drive pinion 118, see Figs. 9a to 9c. The crank-drive body 116 is juxtaposed to the hub 36, as shown in Fig. 1. The drive pinion 118 is connected to and rotationally fixed relative to the crank axle 108 of the crank 106. The crank-drive body 116 is intended to be stationary relative to the vehicle. The crank-drive body 116 is a rigid structure and forms a stationary gear 120, which means that the stationary gear 120 is fixed relative to the crank-drive body 116. The stationary gear 120 has is a sector of a circular internal gear.

The crank-drive body 116 forms a pivot bore 122, and the pivot axle 48 extend through the pivot bore 122. The pivot axle 48 has an actuator interface 124 in the form of a spline intended to be connected to a wiper actuator. The pivot axle 48 extends from the crank-drive body 116 and the actuator interface 124 is accessible on the inner side of the crank drive 114 relative to the vehicle. The crank-drive body 116 y forms an axial support 126 that can carry axial loads from the hub 36 that are parallel to the pivot axis 50. It further forms a radial support 128 that can carry radial loads from the hub 36 that are perpendicular to the pivot axis 50. This way, the hub body 38 is connected to and pivotable relative to the crank-drive body 116.

The crank axle 108 and the pivot axle 48 are eccentric, the drive pinion 118 and the crank axle 108 are concentric, and the stationary gear 120 and the pivot 46 are concentric. The stationary gear 120 and the drive pinion 118 cooperate to rotate the drive pinion 118 at a pivoting of the hub body 38 about the pivot axis 50, and they are arranged to convert a pivoting angular displacement of the hub body 38 about the pivot axis 50 to a rotating angular displacement of the drive pinion 118 that is larger than the pivoting angular displacement by a factor 5.625.

Arranged as specified here, the crank drive 114 is configured to convert a pivoting of the hub 36 about the pivot 46 to the circular motion that is converted to a linear motion by the crank 106. Generally, the crank 106 and the crank drive 114 of the rotary-to-linear converter 40 are operationally connected to the hub 36 and the input part 52 and configured to move the input part 52 in an input stroke relative to the hub body 38 at a pivoting of the hub body 38 about the pivot axis 50 relative to the crank-drive body 116. More generally, the rotary-to-linear converter 40 is operationally connected to the hub 36 and the input part 52 and configured to move the input part 52 in an input stroke relative to the hub 36 at a pivoting of the hub 36 about the pivot axis 50 relative to the vehicle.

The wiper-arm support 44 has a seat 130 for the base 20 of the wiper arm 12 and a plurality of fasteners. The seat 130 is formed by the output rail 58 and thus fixed relative to the output rail 58. The fasteners includes clamp 132 that extends across the base 20 of the wiper arm 12 and biases the base 20 of the wiper arm 12 against the seat 130, see Fig. 2. The clamp 132 is located at the forward end 66 of the output rail 58. The seat 130 also forms a plurality of threaded bores 134, see Fig. 6b, and the through holes 138 in the base 20 of the wiper arm 12 are aligned with the threaded bores 134. The fasteners further includes a plurality of screws 136, see Fig. 2, and each screw 134 extends through a through hole 138 and cooperate with a threaded bore 134 to bias the base 20 of the wiper arm 12 against the seat 130. This way, the seat 130 and the fasteners are arranged to lock the base 20 of the wiper arm 12 relative to the output rail 58, and the wiper-arm support 44 is configured to lock the base 20 of the wiper arm 12 relative to the output part 54.

The hub 36 has a cover 140 that is attached to the hub body 38, see Fig. 1. The cover 140 covers the rotary-to-linear converter 40. In the retracted disposition shown in Fig. 7a, the linear-to-linear converter 42 is covered by the cover 140, and in the extended disposition shown in Fig. 7c, the linear-to-linear converter 42 extends from the cover 140.

### ITEM LIST

10 wiper arrangement
12 wiper arm
14 hub arrangement
16 wiper blade
18 mounting adapter
20 base
22 beam
24 mount
26 front side
28 rear side
30 first edge
32 second edge
34 bisecting plane
36 hub
38 hub body
40 rotary-to-linear converter
42 linear-to-linear converter
44 wiper-arm support
46 pivot
48 pivot axle
50 pivot axis
52 input part
54 output part
56 input rail
58 output rail
60 first side
62 second side
64 rearward end
66 forward end
68 rack-and-pinion arrangement
70 input pinion
72 output pinion
74 input rack
76 output rack
78 pinion support
80 pinion shaft
82 pinion axis
84 bearing
86 additional rack-and-pinion arrangement
88 input linear guide
90 output linear guide
92 intermediate linear guide
94 first wheels
96 second wheels
98 first rail guide
100 second rail guide
102 input axis
104 output axis
106 crank
108 crank axle
110 crank arm
112 crank connector
114 crank drive
116 crank-drive body
118 drive pinion
120 stationary gear
122 pivot bore
124 actuator interface
126 axial support
128 radial support
130 seat
132 clamp
134 threaded bores
136 screws
138 through holes
140 cover

## Claims

1. A wiper arm (12) for a wiper arrangement (10), wherein the wiper arm (12) comprises:
- a base (20),
- a beam (22), and
- a mount (24), wherein
the base (20) is configured to be connected to a hub (36) of the wiper arrangement (10),
the beam (22) interconnects the base (20) and the mount (24), the beam (22) forms a cantilever leaf spring between the base (20) and the mount (24), the mount (24) is configured to be connected to a wiper blade, and the wiper arm (12) is a monolithic structure.

2. The wiper arm (12) according to claim 1, wherein the wiper arm (12) is composed of carbon-fiber reinforced polymer.

3. The wiper arm (12) according to claim 2, wherein the beam (22) has a front side (26) and an opposite rear side (28), the front side (26) is biconvex, and the rear side (28) is biconvex.

4. The wiper arm (12) according to claim 3, wherein the front side (26) is smooth and the rear side (28) is smooth.

5. The wiper arm (12) according to claim 4, wherein the front side (26) and the rear side (28) are isometric.

6. The wiper arm (12) according to claim 5, wherein the beam (22) is symmetric relative to a bisecting plane (34) that extends between the base (20) and the mount (24), the beam (22) is flexible in the bisecting plane (34) and rigid normal to the bisecting plane (34).

7. A wiper arrangement (10) for a vehicle, wherein the wiper arrangement (10) comprises a wiper arm (12) according to claim 6 and a hub arrangement, and the hub arrangement comprises:
- a hub (36),
- a rotary-to-linear converter (40),
- a linear-to-linear converter (42), and
- a wiper-arm support (44),
wherein the hub (36) has a pivot (46) that defines a pivot axis (50) about which the hub (36) is intended to pivot, the linear-to-linear converter (42) has an input part (52) and an output part (54), the wiper-arm support (44) is connected to the base (20) of the wiper arm (12), the rotary-to-linear converter (40) is operationally connected to the hub (36) and configured to move the input part (52) in a input stroke relative to the hub (36) at a pivoting of the hub (36) about the pivot axis (50) relative to the vehicle, the linear-to-linear converter (42) is configured to move the output part (54) in an output stroke relative to the input part (52) at an input stroke of the input part (52), and the output stroke is greater than the input stroke.

8. The wiper arrangement (10) according to claim 7, wherein the input stroke has an input stroke length relative to the hub (36), the output stroke has an output stroke length relative to the input part (52), and the output stroke length is greater than the input stroke length by a factor that is greater than 1.5, greater than 2, or greater than 2.2.

9. The wiper arrangement (10) according to claim 7 or 8, wherein the input part (52) comprises an input rail (56), the output part (54) comprises an output rail (58), and the linear-to-linear converter (42) comprises a rack-and-pinion arrangement (68) that operationally connects the input rail (56) and the output rail (58).

10. The wiper arrangement (10) according to claim 9, wherein the rack-and-pinion arrangement (68) comprises an input pinion (70), an output pinion (72), an input rack (74), and an output rack (76), the input pinion (70) is configured to cooperate with the input rack (74), the output pinion (72) is configured to cooperate with the output rack (76), the input pinion (70) and the output pinion (72) are concentric and fixed relative to one another, the input pinion (70) and the output pinion (72) have fixed positions relative to the hub (36), the input rack (74) is fixed relative to the input rail (56), the output rack (76) is fixed relative to the output rail (58), each of the input pinion (70) and the output pinion (72) has a pitch diameter, and the pitch diameter of the output pinion (72) is greater than the pitch diameter of the input pinion (70).

11. The wiper arrangement (10) according to claim 10, wherein the pitch diameter of the output pinion (72) is greater than the pitch diameter of the input pinion (70) by a factor that is greater than 1.5, greater than 2, or greater than 2.2.

12. The wiper arrangement (10) according to claim 10 or 11, wherein the rack-and-pinion arrangement (68) comprises a pinion support (78), and the pinion support (78) rotationally supports the input pinion (70) and the output pinion (72) relative to the hub (36).

13. The wiper arrangement (10) according to any of the claims 10 to 12, wherein the hub arrangement further comprises an input linear guide (88) configured to guide the input rail (56) along an input axis (102) relative to the hub (36), and the input linear guide (88) spaces the input rail (56) apart from the hub (36).

14. The wiper arrangement (10) according to any of the claims 10 to 13, wherein the hub arrangement further comprises an output linear guide (90) configured to guide the output rail (58) along an output axis (104) relative to the hub (36), and the output linear guide (90) spaces the output rail (58) apart from the hub (36) and the input rail (56).
